# EUROPEAN PATENT APPLICATION

(11) **EP 4 400 395 A1**
(43) Date of publication of application: **17.07.2024**
(21) Application number: 22922732.7
(22) Date of filing: 27.01.2022
(51) Int. Cl.: B62D 65/18, B62D 65/04, B62D 65/14, B62D 65/16

(54) **VEHICLE ASSEMBLY PRODUCTION LINE AND VEHICLE ASSEMBLY METHOD**

(71) Applicant: Contemporary Amperex Technology Co., Limited, Ningde City, Fujian PRC 352100 (CN)
(72) Inventor: WANG, Hao, Ningde, Fujian 352100 (CN); LI, Yongjie, Ningde, Fujian 352100 (CN); WU, Kai, Ningde, Fujian 352100 (CN)
(74) Representative: Thoma, Michael
(86) International application number: PCT/CN2022/074350
(87) International publication number: WO 2023/141886

(57) **Abstract**

Embodiments of the present application provide a vehicle final assembly line and a vehicle final assembly method. A vehicle includes an electric chassis and a vehicle body to be assembled, and the vehicle body is configured to be connected to the electric chassis. The vehicle final assembly line includes: an automatic guided vehicle AGV, configured to convey the electric chassis to a marriage station; a vehicle body positioning device, configured to position the vehicle body on the electric chassis to connect the vehicle body to the electric chassis at the marriage station; the AGV being further configured to: convey the vehicle body and the electric chassis that are connected to each other to a plurality of assembly stations in sequence so as to complete assembly of the vehicle at the plurality of assembly stations; and an end-of-line device, configured to separate the assembled vehicle from the AGV at the end-of-line station, to cause the assembled vehicle to leave the line. The vehicle final assembly line and the vehicle final assembly method according to the embodiments of the present application can improve the vehicle final assembly efficiency greatly.

## Description

### Technical Field

The present application relates to the technical field of automobiles, and in particular to a vehicle final assembly line and a vehicle final assembly method.

### Background Art

A traditional passenger vehicle final assembly line usually includes an interior trim line, a chassis line, and an exterior assembly line. Most of original equipment manufacturers employ skid or slat-chain conveying for the interior trim line and the exterior assembly line, each of which has a specially-structured civil foundation, leading to inconvenience of reformation or capacity expansion, longer shutdown period, and high investment. The chassis line involves an operating platform for lower vehicle parts, and there is, therefore, a need for a fixture mechanical conveying line to create a lower body operating platform and form an assembly line. However, part of the fixture line has a fixed form and high initial investment, as well as high difficulty in late reformation and maintenance.

Accordingly, it is difficult for a traditional final assembly workshop to accommodate to the needs for fast response to existing markets. With the trend of rapid update of vehicle models and the trend of light-asset vehicle production, there is a more urgent need for a flexible, simplified, easily modifiable, and low-cost production line.

### Summary of the Invention

Embodiments of the present application provide a vehicle final assembly line and a vehicle final assembly method, which can improve the vehicle final assembly efficiency greatly.

In a first aspect, provided is a vehicle final assembly line. A vehicle includes an electric chassis and a vehicle body to be assembled, and the vehicle body is configured to be connected to the electric chassis. The vehicle final assembly line includes: an automatic guided vehicle AGV, configured to convey the electric chassis to a marriage station; a vehicle body positioning device, configured to position the vehicle body on the electric chassis to connect the vehicle body to the electric chassis at the marriage station; the AGV being further configured to: convey the vehicle body and the electric chassis that are connected to each other to a plurality of assembly stations in sequence so as to complete assembly of the vehicle at the plurality of assembly stations; and an end-of-line device, configured to separate the assembled vehicle from the AGV at the end-of-line station, to cause the assembled vehicle to leave the line.

Accordingly, with regard to the vehicle final assembly line according to the embodiments of the present application, firstly, the electric chassis is conveyed by the AGV and connected to the vehicle body, and a bottom operating platform in a traditional final assembly process is omitted, so creating the bottom operating platform by means of a fixture line is avoided. Secondly, other assembly operations can be achieved by the AGV conveying the electric chassis and the vehicle body so that a through mechanical conveying line is formed, and a large plate line for interior trims is omitted, greatly improving assembly efficiency. A production line can be formed by means of multiple AGVs, so as to assemble vehicles in batches. There is no need for high investment in civil construction, the mechanical conveying form and adaptation form for final assembly are simplified, and reduced investment and shortened period are offered for mechanical conveying construction. Furthermore, an appropriate number of AGVs may be equipped depending on a desired capacity.

During use of the vehicle final assembly line, arrangement of various assembly stations of the vehicle final assembly line may be adjusted and optimized constantly according to the process requirements. For example, it is possible to split a high-configuration installation process into off-line subassembly and re-online according to the requirements of different vehicle models, providing a high degree of flexibility and a compatibility with various vehicle model platforms. Specifically, when there is a need for reforming, or expanding capacity of, the vehicle final assembly line, it is possible to regulate a travel path of the AGV, e.g., regulate a navigation magnetic guide strip or positioning code of the AGV to alter the travel path or increase the number of AGVs and regulate respective procedures, so that reforming is greatly simplified and little or no additional shutdown time is required.

In some embodiments, the electric chassis includes a lower body frame, a suspension system, a steering system, a braking system, a chassis electronics control system, and an energy storage system; and the suspension system, the steering system, the braking system, the chassis electronics control system, and the energy storage system are all mounted on the lower body frame.

Since the electric chassis has a travel control system integrated with the energy storage system such that the electric chassis may be connected preferentially to the vehicle body, a bottom operating platform during traditional final assembly is omitted, that is, creating the bottom operating platform by means of a fixture line is avoided, and there is no need for large civil construction investment, thus simplifying the mechanical conveying form and adaptation form of final assembly, and allowing for reduced investment and shorter period for mechanical conveying construction.

In some embodiments, the electric chassis further includes: a cooling heat pump system mounted on the lower body frame.

In some embodiments, the AGV has a lifting function so that the vehicle body and the electric chassis that are connected to each other and conveyed by the AGV meet requirements for assembly heights of the plurality of assembly stations.

Given the plurality of assembly stations involve assembly operations on various components of the vehicle while different assembly operations have different height requirements for a vehicle to be assembled, it is therefore possible that by using the AGV having a lifting function, the vehicle body and the electric chassis that are connected to each other meet the requirements for assembly heights at the plurality of assembly stations, and the requirements of ergonomics are met, thereby avoiding large civil construction investment and lowering the cost of the vehicle final assembly line.

In some embodiments, the AGV is further configured to: after being separated from the assembled vehicle at the end-of-line station, convey an electric chassis of a next vehicle to be assembled to the marriage station for carrying out a final assembly process of the next vehicle to be assembled, and so on, thereby forming a vehicle final assembly line.

In some embodiments, the plurality of assembly stations include: a plurality of interior trim assembly stations for performing interior trim assembly operations on the vehicle; and a plurality of exterior assembly stations for performing exterior assembly operations on the vehicle. The interior trim assembly operations for the vehicle are completed by means of the plurality of interior trim assembly stations and the plurality of exterior assembly stations.

In some embodiments, the vehicle final assembly line further includes: a pre-assembly device, configured to convey the vehicle body to be assembled from a vehicle body temporary storage zone to a front compartment pre-assembly station in front of the marriage station, to complete a front compartment pre-assembly operation at the front compartment pre-assembly station for the vehicle body to be assembled.

In a second aspect, provided is a vehicle final assembly method, including: conveying an electric chassis of a vehicle to a marriage station by an automatic guided vehicle AGV; positioning a vehicle body to be assembled of the vehicle on the electric chassis to connect the vehicle body to the electric chassis at the marriage station; conveying the vehicle body and the electric chassis that are connected to each other to a plurality of assembly stations in sequence by the AGV so as to complete assembly of the vehicle at the plurality of assembly stations; and separating the assembled vehicle from the AGV at the end-of-line station, to cause the assembled vehicle to leave the line.

In some embodiments, the electric chassis includes a lower body frame, a suspension system, a steering system, a braking system, a chassis electronics control system, and an energy storage system; and the suspension system, the steering system, the braking system, the chassis electronics control system, and the energy storage system are all mounted on the lower body frame.

In some embodiments, the electric chassis further includes: a cooling heat pump system mounted on the lower body frame.

In some embodiments, the AGV has a lifting function so that the vehicle body and the electric chassis that are connected to each other and conveyed by the AGV meet requirements for assembly heights of the plurality of assembly stations.

In some embodiments, the method further includes: conveying an electric chassis of a next vehicle to be assembled to the marriage station by the AGV after the AGV is separated from the assembled vehicle.

In some embodiments, the plurality of assembly stations include: a plurality of interior trim assembly stations for performing interior trim assembly operations on the vehicle; and a plurality of exterior assembly stations for performing exterior assembly operations on the vehicle.

In some embodiments, the method further includes: conveying the vehicle body to be assembled from a vehicle body temporary storage zone to a front compartment pre-assembly station in front of the marriage station, and completing a front compartment pre-assembly operation at the front compartment pre-assembly station for the vehicle body to be assembled.

### Brief Description of the Drawings

Fig. 1 is a schematic diagram of a vehicle final assembly line disclosed in an embodiment of the present application;
Fig. 2 is a schematic structural diagram of an electric chassis of a vehicle disclosed in an embodiment of the present application;
Fig. 3 is a schematic structural diagram of an AGV conveying an electric chassis disclosed in an embodiment of the present application;
Fig. 4 is a schematic structural diagram of a vehicle body disclosed in an embodiment of the present application;
Fig. 5 is a schematic structural diagram of a vehicle body and an electric chassis that are connected to each other, disclosed in an embodiment of the present application; and
Fig. 6 is a schematic flowchart of a vehicle final assembly method disclosed in an embodiment of the present application.

In the accompanying drawings, the figures are not drawn to scale.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example and are not intended to limit the scope of the present application. That is, the present application is not limited to the described embodiments.

In the description of the present application, it should be noted that "a plurality of' means two or more, unless otherwise specified. The orientation or position relationship indicated by the terms "upper", "lower", "left", "right", "inner", "outer", etc. is only for the convenience of describing the present application and simplifying the description, rather than indicating or implying that the device or element referred to must have a particular orientation or be constructed and operated in a particular orientation, and therefore should not be construed as a limitation on the present application. In addition, the terms "first", "second", "third", etc. are used for descriptive purposes only, and should not be construed as indicating or implying the relative importance. The term "perpendicular" does not mean being perpendicular in the strict sense, but within an allowable range of tolerance. The term "parallel" does not mean being parallel in the strict sense, but within an allowable range of tolerance.

The orientation terms in the following description all indicate directions shown in the accompanying drawings, and do not limit the specific structure in the present application. In the description of the present application, it should also be noted that the terms "mounting", "connect", and "connection" should be interpreted in the broad sense unless explicitly defined and limited otherwise. For example, the connection may be a fixed connection, a detachable connection, or an integral connection, or may be a direct connection, or an indirect connection by means of an intermediate medium. For those of ordinary skill in the art, the specific meanings of the terms mentioned above in the present application can be construed according to specific circumstances.

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated device are merely illustrative and should not be construed to limit the present application in any way.

In a traditional vehicle final assembly scheme, a lower body operating platform is required, that is, it is necessary to create the lower body operating platform and form an assembly line by means of various forms of mechanical conveying lines and mutual adaptations therebetween. Moreover, most of traditional final assembly lines employ interior trim skid line or slat-chain conveying, which involves civil constructions and needs large investment in fixed assets. In addition, the range for reforming and capacity expansion reforming is too wide in a later stage and the shutdown period is long, so that is impossible to accommodate to the needs for fast response to existing markets.

Accordingly, an embodiment of the present application provides a vehicle final assembly line. A vehicle includes an electric chassis and a vehicle body to be assembled. The electric chassis is conveyed by an automatic guided vehicle (AGV). Firstly, the vehicle body is connected to the electric chassis so that no lower body operation is required during subsequent assembly. Secondly, the AGV that carries the electric chassis and the vehicle body passes through a plurality of assembly stations in sequence, and assembly of the vehicle is completed through conveying by the AGV. The vehicle final assembly line can complete various assembly operations simply through conveying by the AGV. With a plurality of AGVs, a production line can be formed to assemble the vehicles in batches. Interior trim large plate lines and chassis marriage fixture lines in traditional methods are omitted, so that the assembly efficiency is greatly improved. Moreover, when there is a need for reforming, or expanding capacity of, the vehicle final assembly line, it is possible to regulate a travel path of the AGV, e.g., regulate a navigation magnetic guide strip or positioning code of the AGV to alter the travel path or increase the number of AGVs and regulate respective procedures, so that reforming is greatly simplified and little or no additional shutdown time is required.

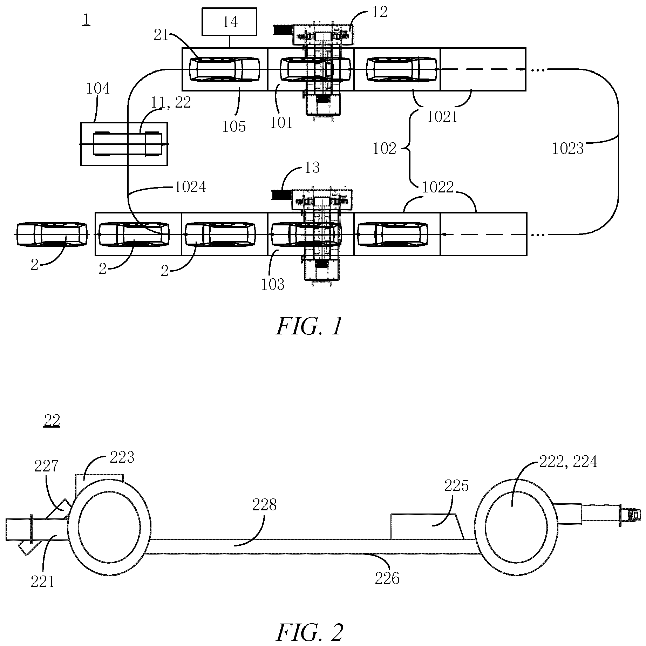

Fig. 1 shows a schematic diagram of a vehicle final assembly line 1 according to an embodiment of the present application. As shown in Fig. 1, the vehicle final assembly line 1 may be configured to assemble a vehicle 2, the vehicle 2 includes an electric chassis 22 and a vehicle body 21 to be assembled, and the vehicle body 21 is configured to be connected to the electric chassis 22. Specifically, the vehicle final assembly line 1 includes: an AGV 11, configured to convey the electric chassis 22 to a marriage station 101; a vehicle body positioning device 12, configured to position the vehicle body 21 on the electric chassis 22 to connect the vehicle body 21 to the electric chassis 22 at the marriage station 101; the AGV 11 being further configured to: convey the vehicle body 21 and the electric chassis 22 that are connected to each other to a plurality of assembly stations 102 in sequence so as to complete assembly of the vehicle 2 at the plurality of assembly stations 102; and an end-of-line device 13, configured to separate the assembled vehicle 2 from the AGV 11 at the end-of-line station 103, to cause the assembled vehicle 2 to leave the line.

It is to be understood that the vehicle 2 according to an embodiment of present application may be a new energy vehicle, which may be a battery electric vehicle or a hybrid electric vehicle. Specifically, the electric chassis 22 of the vehicle 2 includes an energy storage system. For example, the energy storage system may include a battery for powering the vehicle 2.

Accordingly, with regard to the vehicle final assembly line 1 according to the embodiments of the present application, firstly, the electric chassis 22 is conveyed by the AGV 11 and connected to the vehicle body 21, and a bottom operating platform in a traditional final assembly process is omitted, so creating the bottom operating platform by means of a fixture line is avoided. Secondly, other assembly operations can be achieved by the AGV 11 conveying the electric chassis 22 and the vehicle body 21 so that a through mechanical conveying line is formed, and a large plate line for interior trims is omitted, greatly improving assembly efficiency. Moreover, after a final assembly process of one vehicle 2 is completed, the AGV 11 is separated from the vehicle 2. The AGV 11 may continue to be used for a final assembly process of a next vehicle 2. In this way, a production line can be formed by means of multiple AGVs 11, so as to assemble vehicles 2 in batches. There is no need for high investment in civil construction, the mechanical conveying form and adaptation form for final assembly are simplified, and reduced investment and shortened period are offered for mechanical conveying construction. Furthermore, an appropriate number of AGVs 11 may be equipped depending on a desired capacity.

During use of the vehicle final assembly line 1, arrangement of various assembly stations of the vehicle final assembly line 1 may be adjusted and optimized constantly according to the process requirements. For example, it is possible to split a high-configuration installation process into off-line subassembly and re-online according to the requirements of different vehicle models, providing a high degree of flexibility and a compatibility with various vehicle model platforms. Specifically, when there is a need for reforming, or expanding capacity of, the vehicle final assembly line 1, it is possible to regulate a travel path of the AGV 11, e.g., regulate a navigation magnetic guide strip or positioning code of the AGV 11 to alter the travel path or increase the number of AGVs 11 and regulate respective procedures, so that reforming is greatly simplified and little or no additional shutdown time is required.

It is to be understood that the electric chassis 22 of the embodiments of the present application may be an integrated structure of a vehicle chassis and an energy storage system. For example, the electric chassis 22 may refer to a lower body of a vehicle 2 having a travel control system integrated with the energy storage system. For example, Fig. 2 shows a schematic diagram of an electric chassis 22 according to an embodiment of the present application. As shown in Fig. 2, the electric chassis 22 may include a lower body frame 221, a suspension system 222, a steering system 223, a braking system 224, a chassis electronics control system 225, and an energy storage system 226. The suspension system 222, the steering system 223, the braking system 224, the chassis electronics control system 225, and the energy storage system 226 are all mounted on the lower body frame 221. For example, Fig. 2 shows a possible arrangement of the suspension system 222, the steering system 223, the braking system 224, the chassis electronics control system 225, and the energy storage system 226 on the lower body frame 221, but the embodiments of the present application are not limited thereto.

Specifically, the suspension system 222 in the embodiments of the present application may refer to a general term for any force transmission and connection device between the lower body frame 221 and an axle or wheel of the vehicle 2, and has functions of transmitting force and torque between the wheel and the frame, and cushioning impact force transmitted from an uneven road surface to the frame or to vehicle body 21 and attenuating vibrations caused thereby, so as to ensure that the vehicle 2 travels smoothly.

The steering system 223 of the vehicle 2 may be configured to change or maintain a traveling or reversing direction of the vehicle 2.

The braking system 224 of the vehicle 2 may be configured to positively reduce a traveling speed of the vehicle 2, and has main functions of slowing down or even stopping the traveling vehicle 2, keeping the speed of the vehicle 2 traveling downhill stable, and keeping the stopped vehicle 2 stationary.

The chassis electronics control system 225 of the vehicle 2 may include an electronics control module, and may further include a harness and a piping system for controlling the electric chassis 22.

The energy storage system 226 of the vehicle 2 may be configured to power the vehicle 2. For example, a battery of the energy storage system may serve as a power source for operating the vehicle 2 for use in a circuit system of the vehicle 2, e.g., to meet the working power demand of the vehicle 2 during startup, navigation, and running. In another embodiment of the present application, the battery of the energy storage system may not only serve as a power source for operating the vehicle 2, but may also serve as a power source for driving the vehicle 2, instead of or partially instead of fuel or natural air, to provide driving power for the vehicle 2, and the embodiments of the present application are not limited thereto.

Optionally, as shown in Fig. 2, the electric chassis 22 may further include: a cooling heat pump system 227. Specifically, the cooling heat pump system 227 may be mounted on the lower body frame 221, for example, in a position shown in Fig. 2, or in other positions. The cooling heat pump system 227 may be configured to provide heat for components that may generate heat during traveling of the vehicle 2, or to cool components of the vehicle 2, or to provide heat for or cool an interior space of the vehicle 2. For example, the cooling heat pump system 227 may include an air conditioner of the vehicle 2, and the embodiments of the present application are not limited thereto.

In an embodiment of the present application, as shown in Fig. 1, before the AGV 11 conveys the electric chassis 22 to the marriage station 101, it is optionally possible to arrange the electric chassis 22 on the AGV 11 at a fixing station 104, so that the AGV 11 can convey the electric chassis 22 to the marriage station 101.

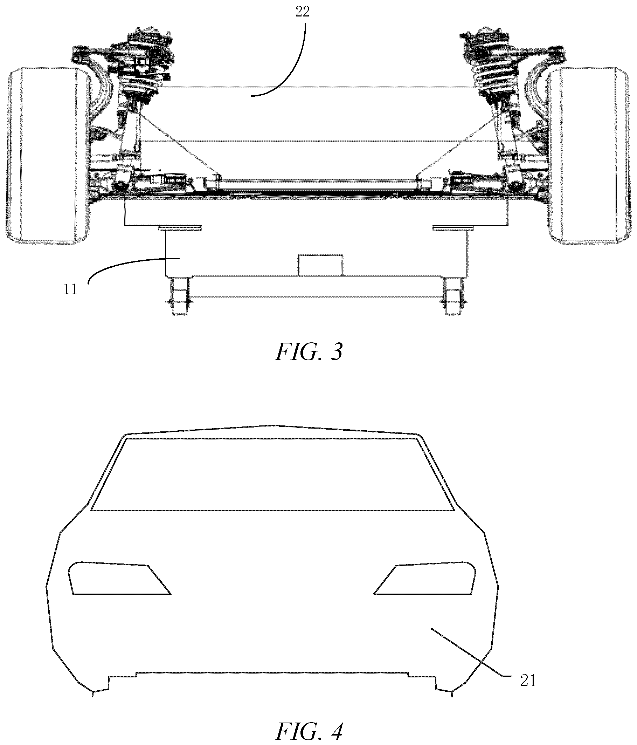

Fig. 3 shows a schematic diagram of an AGV 11 conveying an electric chassis 22 in an embodiment of the present application. As shown in Figs. 1 and 3, at the fixing station 104, the electric chassis 22 may be placed on the AGV 11 by manual or mechanical means, etc., so that the AGV 11 can convey the electric chassis 22 to move along various stations of the vehicle final assembly line 1. Optionally, the AGV 11 may have a limiting structure such that the electric chassis 22 is fixed relative to the AGV 11, so that the electric chassis 22 remains stable when passing through subsequent various installation stations, thereby improving the final assembly efficiency.

In an embodiment of the present application, a vehicle body positioning device 12 of the vehicle final assembly line 1 positions a vehicle body 21 on an electric chassis 22 to connect the vehicle body 21 to the electric chassis 22 at the marriage station 101.

It is to be understood that before the vehicle body positioning device 12 of the embodiment of the present application positions the vehicle body 21 on the electric chassis 22, that is, before the vehicle body 22 is not connected to the electric chassis 22, the vehicle body 22 may be referred to as a vehicle body 22 to be assembled. The vehicle body 22 to be assembled may refer to a vehicle body 22 to be assembled that is conveyed directly from a vehicle body temporary storage zone. Alternatively, the vehicle body 22 to be assembled may be a vehicle body 22 to be assembled that has undergone a pre-assembly operation.

Fig. 4 shows a schematic diagram of a vehicle body 22 to be assembled according to an embodiment of the present application. Optionally, with reference to Figs. 1 and 4, the vehicle final assembly line 1 further includes: a pre-assembly device 14, configured to convey the vehicle body 21 to be assembled from a vehicle body temporary storage zone to a front compartment pre-assembly station 105 in front of the marriage station 101, to complete a front compartment pre-assembly operation at the front compartment pre-assembly station 105 for the vehicle body 21 to be assembled. Specifically, the front compartment pre-assembly station 105 may be used for carrying out the front compartment pre-assembly operation. For example, the front compartment pre-assembly operation may include assembly operations of an air conditioning system and a front compartment harness, and the embodiments of the present application are not limited thereto.

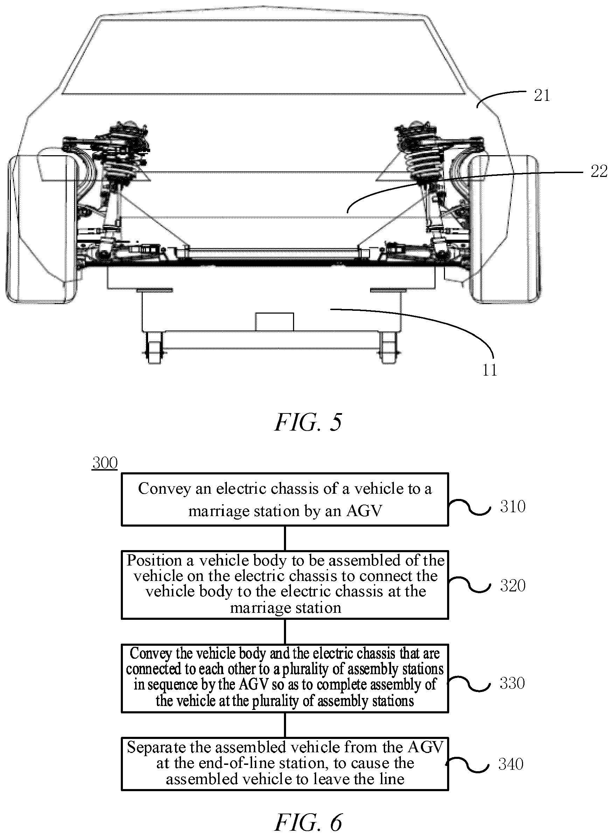

Fig. 5 shows a schematic diagram of a vehicle body 21 and an electric chassis 22 that are connected to each other, according to an embodiment of the present application. As shown in Figs. 1 and 5, the vehicle body 21 is connected to the electric chassis 22 at a marriage station 101. Optionally, the electric chassis 22 of the embodiment of the present application is in a substantially completed state, and the marriage station 101 of the vehicle final assembly production line 1 is mainly responsible for butt joint of mechanical, electrical, liquid pipelines of the vehicle body 21 and the electric chassis 22 and other processes.

In the embodiment of the present application, with regard to the vehicle body 21 and the electric chassis 22 that are connected to each other, they may be conveyed by the AGV 11 to pass through a plurality of assembly stations 102 in sequence to complete assembly of the vehicle 2. It is to be understood that Fig. 1 simplifies the plurality of assembly stations 102, and does not show all the assembly stations 102.

Optionally, as shown in Fig. 1, the plurality of assembly stations 102 according to the embodiment of the present application may include: a plurality of interior trim assembly stations 1021 and a plurality of exterior assembly stations 1022. Specifically, the plurality of interior trim assembly stations 1021 are used for performing interior trim assembly operations on the vehicle 2. For example, the interior trim assembly operations may include assembly operations on some or all of the following components: a main harness and a front compartment harness, an antiblock brake system (ABS) module and a braking pipeline, a front compartment air conditioning pipe, an electronic control module, a sunroof, an instrument panel, a roof, a carpet, a console, front and rear windshields, and an exterior trim.

Similarly, the plurality of exterior assembly stations 1022 are used for performing exterior assembly operations on the vehicle 2. For example, the exterior assembly operations may include assembly operations on some or all of the following components: a front-end module, headlights, seats, front and rear bumpers, tires, a fuel filler and an electrical check out system (ECOS).

Optionally, as shown in Fig. 1, the vehicle final assembly line 1 of the embodiment of the present application may further include at least one turning path 1023. Given the vehicle final assembly line 1 may include a plurality of assembly stations 102, in order to make reasonable use of space, the vehicle final assembly line 1 may further include at least one turning path 1023 to increase the site utilization rate. For example, the vehicle final assembly line 1 may include one turning path 1023, and two ends of the turning path 1023 are respectively configured to be connected to the plurality of interior trim assembly stations 1021 and the plurality of exterior assembly stations 1022, so that not only can the interior trim assembly stations 1021 and the exterior assembly stations 1022 be separated, but also the site and the space can be rationally utilized.

Optionally, the AGV 11 has a lifting function so that the vehicle body 21 and the electric chassis 22 that are connected to each other and conveyed by the AGV 11 meet requirements for assembly heights of the plurality of assembly stations 102. Given the plurality of assembly stations 102 involve assembly operations on various components of the vehicle 2 while different assembly operations have different height requirements for a vehicle 2 to be assembled, it is therefore possible that by using the AGV 11 having a lifting function, the vehicle body 21 and the electric chassis 22 that are connected to each other meet the requirements for assembly heights at the plurality of assembly stations 102, and the requirements of ergonomics are met, thereby avoiding large civil construction investment and lowering the cost of the vehicle final assembly line 1.

In an embodiment of the present application, an end-of-line device 13 separates the assembled vehicle 2 from the AGV 11 at the end-of-line station 103, to cause the assembled vehicle 2 to leave the line. Taking Fig. 1 as an example, at the end-of-line station 103, after the end-of-line device 13 separates the AGV 11 from the assembled vehicle 2, the AGV 11 is also used to convey an electric chassis 22 of a next vehicle 2 to be assembled to the marriage station 101.

Specifically, as shown in Fig. 1, the assembled vehicle 2 is separated from the AGV 11, and the vehicle 2 may travel away from the vehicle final assembly line 1 for the next processing. The AGV 11 separated from the vehicle 2 is idle again, the idle AGV 11 may travel to the fixing station 104 along a path 1024 so that the electric chassis 22 of the next vehicle 2 to be assembled is placed on the AGV 11, the AGV 11 then conveys the electric chassis 22 of the next vehicle 2 to be assembled to the marriage station 101 so as to commence a final assembly process for the next vehicle 2 to be assembled. By analogy, a final assembly line for vehicles 2 is formed.

The vehicle final assembly line 1 according to the embodiments of the present application is described above, and a vehicle final assembly method 300 according to embodiments of the present application will be described below. For the parts not described in detail, reference may be made to the foregoing embodiments.

Fig. 6 shows a schematic flowchart of a vehicle final assembly method 300 according to an embodiment of the present application. As shown in Fig. 6, the method 300 includes: a step S310 of conveying an electric chassis 22 of a vehicle 2 to a marriage station 101 by an automatic guided vehicle AGV 11; a step S320 of positioning a vehicle body 21 to be assembled of the vehicle 2 on the electric chassis 22 to connect the vehicle body 21 to the electric chassis 22 at the marriage station 101; a step S330 of conveying the vehicle body 21 and the electric chassis 22 that are connected to each other to a plurality of assembly stations 102 in sequence by the AGV 11 so as to complete assembly of the vehicle 2 at the plurality of assembly stations 102; and a step S340 of separating the assembled vehicle 2 from the AGV 11 at the end-of-line station 103, to cause the assembled vehicle 2 to leave the line.

In some embodiments, the electric chassis 22 comprises a lower body frame 221, a suspension system 222, a steering system 223, a braking system 224, a chassis electronics control system 225, and an energy storage system 226; and the suspension system 222, the steering system 223, the braking system 224, the chassis electronics control system 225, and the energy storage system 226 are all mounted on the lower body frame 221.

In some embodiments, the electric chassis 22 further includes: a cooling heat pump system 227. The cooling heat pump system 227 is mounted on the lower body frame 221.

In some embodiments, the AGV 11 has a lifting function so that the vehicle body 21 and the electric chassis 22 that are connected to each other and conveyed by the AGV 11 meet requirements for assembly heights of the plurality of assembly stations 102.

In some embodiments, the method 300 further includes: conveying an electric chassis 22 of a next vehicle to be assembled 2 to the marriage station 101 by the AGV 11 after the AGV 11 is separated from the assembled vehicle 2.

In some embodiments, the plurality of assembly stations 102 include: a plurality of interior trim assembly stations 1021 for performing interior trim assembly operations on the vehicle 2; and a plurality of exterior assembly stations 1022 for performing exterior assembly operations on the vehicle 2.

In some embodiments, the method 300 further includes: conveying the vehicle body 21 to be assembled from a vehicle body temporary storage zone to a front compartment pre-assembly station 105 in front of the marriage station 101, and completing a front compartment pre-assembly operation at the front compartment pre-assembly station 105 for the vehicle body 21 to be assembled.

Although the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A vehicle final assembly line (1), **characterized in that** a vehicle (2) comprises an electric chassis (22) and a vehicle body (21) to be assembled, and the vehicle body (21) is configured to be connected to the electric chassis (22); and
the vehicle final assembly line (1) comprises:
an automatic guided vehicle AGV (11), configured to convey the electric chassis (22) to a marriage station (101);
a vehicle body positioning device (12), configured to position the vehicle body (21) on the electric chassis (22) to connect the vehicle body (21) to the electric chassis (22) at the marriage station (101);
the AGV (11) being further configured to: convey the vehicle body (21) and the electric chassis (22) that are connected to each other to a plurality of assembly stations (102) in sequence so as to complete assembly of the vehicle (2) at the plurality of assembly stations (102); and
an end-of-line device (13), configured to separate the assembled vehicle (2) from the AGV (11) at the end-of-line station (103), to cause the assembled vehicle (2) to leave the line.

2. The vehicle final assembly line (1) according to claim 1, **characterized in that** the electric chassis (22) comprises a lower body frame (221), a suspension system (222), a steering system (223), a braking system (224), a chassis electronics control system (225), and an energy storage system (226); and the suspension system (222), the steering system (223), the braking system (224), the chassis electronics control system (225), and the energy storage system (226) are all mounted on the lower body frame (221).

3. The vehicle final assembly line (1) according to claim 2, **characterized in that** the electric chassis (22) further comprises: a cooling heat pump system (227), the cooling heat pump system (227) being mounted on the lower body frame (221).

4. The vehicle final assembly line (1) according to any one of claims 1 to 3, **characterized in that** the AGV (11) has a lifting function so that the vehicle body (21) and the electric chassis (22) that are connected to each other and conveyed by the AGV (11) meet requirements for assembly heights of the plurality of assembly stations (102).

5. The vehicle final assembly line (1) according to any one of claims 1 to 4, **characterized in that** the AGV (11) is further configured to:
convey an electric chassis (22) of a next vehicle (2) to be assembled to the marriage station (101) after being separated from the assembled vehicle (2) at the end-of-line station (103).

6. The vehicle final assembly line (1) according to any one of claims 1 to 5, **characterized in that** the plurality of assembly stations (102) comprise:
a plurality of interior trim assembly stations (1021) for performing interior trim assembly operations on the vehicle (2); and
a plurality of exterior assembly stations (1022) for performing exterior assembly operations on the vehicle (2).

7. The vehicle final assembly line (1) according to any one of claims 1 to 6, **characterized in that** the vehicle final assembly line (1) further comprises:
a pre-assembly device (14), configured to convey the vehicle body (21) to be assembled from a vehicle body temporary storage zone to a front compartment pre-assembly station (105) in front of the marriage station (101), to complete a front compartment pre-assembly operation at the front compartment pre-assembly station (105) for the vehicle body (21) to be assembled.

8. A vehicle final assembly method, **characterized by** comprising:
conveying an electric chassis (22) of a vehicle (2) to a marriage station (101) by an automatic guided vehicle AGV (11);
positioning a vehicle body (21) to be assembled of the vehicle (2) on the electric chassis (22) to connect the vehicle body (21) to the electric chassis (22) at the marriage station (101);
conveying the vehicle body (21) and the electric chassis (22) that are connected to each other to a plurality of assembly stations (102) in sequence by the AGV (11) so as to complete assembly of the vehicle (2) at the plurality of assembly stations (102); and
separating the assembled vehicle (2) from the AGV (11) at the end-of-line station (103), to cause the assembled vehicle (2) to leave the line.

9. The method according to claim 8, **characterized in that** the electric chassis (22) comprises a lower body frame (221), a suspension system (222), a steering system (223), a braking system (224), a chassis electronics control system (225), and an energy storage system (226); and the suspension system (222), the steering system (223), the braking system (224), the chassis electronics control system (225), and the energy storage system (226) are all mounted on the lower body frame (221).

10. The method according to claim 9, **characterized in that** the electric chassis (22) further comprises: a cooling heat pump system (227), the cooling heat pump system (227) being mounted on the lower body frame (221).

11. The method according to any one of claims 8 to 10, **characterized in that** the AGV (11) has a lifting function so that the vehicle body (21) and the electric chassis (22) that are connected to each other and conveyed by the AGV (11) meet requirements for assembly heights of the plurality of assembly stations (102).

12. The method according to any one of claims 8 to 11, **characterized by** further comprising:
conveying an electric chassis (22) of a next vehicle to be assembled (2) to the marriage station (101) by the AGV (11) after the AGV (11) is separated from the assembled vehicle (2).

13. The method according to any one of claims 8 to 12, **characterized in that** the plurality of assembly stations (102) comprise:
a plurality of interior trim assembly stations (1021) for performing interior trim assembly operations on the vehicle (2); and
a plurality of exterior assembly stations (1022) for performing exterior assembly operations on the vehicle (2).

14. The method according to any one of claims 8 to 13, **characterized by** further comprising:
conveying the vehicle body (21) to be assembled from a vehicle body temporary storage zone to a front compartment pre-assembly station (105) in front of the marriage station (101), and completing a front compartment pre-assembly operation at the front compartment pre-assembly station (105) for the vehicle body (21) to be assembled.
